# EUROPÄISCHE PATENTSCHRIFT

(11) **EP 0 760 753 B1**
(45) Veröffentlichungstag und Bekanntmachung des Hinweises auf die Patenterteilung: **25.08.1999**
(21) Anmeldenummer: 95919418.4
(22) Anmeldetag: 06.05.1995
(51) Int. Cl.: B60Q 1/42

(54) **RÜCKSTELLVORRICHTUNG FÜR BLINKERRÜCKSTELLSCHALTER MIT DURCH EINE DRUCKFEDER VORGESPANNTEM AUSLÖSEFINGER**
BLINKER SWITCH RESET DEVICE WITH A RELEASING FINGER BIASED BY A COMPRESSION SPRING
DISPOSITIF DE RAPPEL POUR CLIGNOTANTS AVEC DOIGT DE DECLENCHEMENT SOLLICITE PAR UN RESSORT DE PRESSION

(30) Priorität: 26.05.1994 DE 4418328
(43) Veröffentlichungstag der Anmeldung: 12.03.1997
(73) Patentinhaber: ITT Automotive Europe GmbH, 60488 Frankfurt (DE)
(72) Erfinder: ENGELHARDT, Martin, D-74189 Weinsberg (DE); LAICH, Martin, D-71711 Murr (DE)
(74) Vertreter: Portwich, Peter
(86) Internationale Anmeldenummer: EP9501727
(87) Internationale Veröffentlichungsnummer: WO9532876

(56) Entgegenhaltungen:
- DE-A- 2 128 881
- FR-A- 2 280 529
- US-A- 4 570 041

## Beschreibung

Die Erfindung betrifft eine Rückstellvorrichtung mit Überschaltsicherung für Blinkerrückstellschalter in Kraftfahrzeugen. Derartige Blinkerrückstellschalter sind in der Nähe des Lenkrades an der Lenksäule angeordnet und die selbsttätige Rückstellung aus einer der beiden Einschaltstellungen in die neutrale Mittelstellung geschieht durch einen am Schalter befindlichen Auslösefinger, der in den Einschaltstellungen in die Kreisbahn eines an der Lenkspindel angeordneten Nockens hineinragt.

Eine derartige Rückstellvorrichtung ist beispielsweise aus der DE-PS 28 26 597 bekannt. Eine gleichartige Einrichtung wird weiterhin in der DE-OS 35 02 650 sowie in der DE-PS 29 14 742 beschrieben.

Aus der FR-OS 2280529 ist ein Blinkerrückstellschalter bekannt, bei dem ein Auslösenocken in der Kammer eines Schaltstückes dreh- und verschiebbar gelagert ist. Bei diesem Blinkerrückstellschalter (im folgenden vielfach kurz als Schalter bezeichnet) sind zwei Federn hintereinander geschaltet, von denen die erste die Rückstellung und die zweite das Schaltgefühl des Lenkstockhebels beeinflußt. In der Auswahl der Federkonstanten ist man daher von zwei Parametern abhängig, die die optimale Dimensionierung der die Rückstellung beeinflussenden ersten Feder in Frage stellen.

Für alle diese bekannten Systeme ist es wichtig, daß der Auslösefinger sowohl zur Lenkspindel hin vorgespannt wird, als auch durch Federkraft in seine Normallage hin federnd ausgerichtet wird, wobei in der Normallage der Auslösefinger zur Lenkspindel hin weist.

Bei der in der DE-PS 35 02 650 beschriebenen Rückstellvorrichtung sowie auch bei allen anderen o.g. Vorrichtungen wird der Auslösefinger derart vorgespannt, daß zwei an ihrem einen Ende an dem Schaltergehäuse befestigte Spiralfedern symmetrisch an zwei seitlichen Ansätzen des Auslösefingers angreifen, wobei beide Federn eine gemeinsame Kraftkomponente zur Lenksäule hin aufweisen, während das von beiden Federn gemeinsam auf den Auslösefinger ausgeübte Drehmoment diesen in seine Normalstellung zu ziehen sucht.

Die Erfindung geht daher aus von einer Rückstelleinrichtung, wie sie durch den Oberbegriff des Anspruchs 1 festgelegt ist.

Nachteilig bei den bekannten Rückstellvorrichtungen ist es, daß die beiden an dem Auslösefinger angreifenden Federn zur Geräuschbildung neigen und vergleichsweise sperrig sind, da sie durch einen erheblichen Bereich des Gehäuseinnenraums reichen. Zudem erfordert die Befestigung der vier Enden dieser Federn einen zusätzlichen und nicht automatisierbaren Aufwand, insbesondere, wenn das unbeabsichtigte Aushängen einer dieser Federn an einem der Aufhängepunkte sicher verhindert werden soll.

Aufgabe der Erfindung ist es daher, eine Rückstelleinrichtung der oben angegebenen Gattung anzugeben, welche einfacher aufgebaut ist als die oben beschriebenen Rückstellvorrichtungen und ohne die beiden gegeneinander wirkenden, als Zugfedern ausgestalteten Vorspannfedern auskommt.

Die Aufgabe wird durch die sich aus dem kennzeichnenden Teil des Anspruchs 1 ergebende Merkmalskombination gelöst. Die Erfindung besteht im Prinzip also darin, statt der beiden bekannten Zugfedern eine einzige Druckfeder zu verwenden, die zudem mit einer ebenen Auflagefläche auf die ebene Auflagefläche des Führungsansatzes einwirkt. Durch die in Anspruch 1 beschriebenen Maßnahmen wird sowohl erreicht, daß der Führungsansatz immer zur Lenkspindel hin vorgespannt wird. Andererseits ist dafür gesorgt, daß bei einer Schwenkbewegung des Auslösefingers wegen der gleichzeitig verschwenkten Angriffsfläche des Auslösefingers gegenüber der ebenen Angriffsfläche der Feder, deren Angriffspunkt aus der Mittellinie des Auslösefingers heraus verlegt und hierdurch durch die Druckfeder ein Drehmoment zusätzlich aufgebracht wird, welches den Auslösefinger in seine Normalstellung zurückzudrehen sucht.

Um einerseits zu erreichen, daß die Auflagefläche für den Führungsansatz gegenüber der Feder möglichst groß ist und andererseits eine mögliche Schwenkbewegung des Führungsfingers nicht behindert wird, empfiehlt sich in Weiterbildung der Erfindung die Merkmalskombination nach Anspruch 2. Dabei können die Seitenflächen des Führungsansatzes einerseits im wesentlichen linienförmig an den Seitenflächen der Längsnut angreifen. Andererseits wird durch die bogenförmige Kontur der Seitenflächen eine Schwenkbewegung des Auslösefingers nicht gehindert.

Um die Anlagefläche der Feder gegenüber dem Führungsansatz möglichst groß zu gestalten und damit bei vorgegebener Nutbreite ein möglichst großes Drehmoment bei einer Schwenkbewegung des Auslösefingers zu erhalten, empfiehlt sich in Weiterbildung der Erfindung die Merkmalskombination nach Anspruch 3. Danach fällt die Kontur des Führungsansatzes mit Abschnitten eines Kreises zusammen, welcher mit seinem Umfang an den Seitenwänden der Nut anliegt.

Um eine exakt zur Lenkspindelmitte gerichtete Normallage des Auslösefingers zu erreichen, empfiehlt sich in Weiterbildung der Erfindung die Merkmalskombination nach Anspruch 4. Danach wird vorzugsweise das dem Auslösefinger zugewandte Ende der Spiralfeder plan geschliffen, so daß sich eine ringförmige in einer Ebene liegende Auflagefläche der Feder auf dem Führungsansatz ergibt.

Um nun zu verhindern, daß die Kanten der Feder die Ebene des Führungsansatzes verletzen können und um die Auflagefläche der Feder gegenüber dem Führungsansatz zu verbessern, werden in Weiterbildung der Erfindung die Merkmale nach Anspruch 5 vorgeschlagen. Danach wirkt das dem Führungsansatz zugewandte Ende der Feder nicht direkt auf den Führungsansatz ein, sondern über eine Hülse, so daß die Federkräfte auf eine Fläche gleichmäßig verteilt sind.

Eine besonders einfache Ausgestaltung für die Hülse ergibt sich aus den Merkmalen nach Anspruch 6. Dabei wird durch die Hülse zusätzlich sichergestellt, daß die Feder in keiner Weise seitlich ausknicken kann.

Wie weiter oben schon erläutert, stützt sich das dem Führungsansatz abgewandte Ende der Feder an dem Schaltergehäuse direkt oder an einem gegenüber dem Schaltergehäuse ortsfesten Bauelement ab. Um nun zu verhindern, daß das sich am Gehäuse abstützende Ende aufgrund der auf die Feder einwirkenden Kräfte seitlich ausgelenkt werden kann, dienen die in Anspruch 7 aufgeführten Merkmale.

Die vorliegende Beschreibung nimmt ausführlich Bezug auf den weiter oben genannten Stand der Technik und dort insbesondere auf die DE-OS 35 02 650. In der Zeichnung werden daher die Bauelemente nur so weit erläutert, wie dies im Zusammenhang mit der DE-OS 35 02 650 notwendig erscheint. Es zeigen
- Fig. 1: in abgebrochener und geschnittener Darstellung einen Ausschnitt aus einer Rückstellvorrichtung und
- Fig. 2: einen Schnitt entlang der Linie A durch die Rückstellvorrichtung nach Fig. 1.

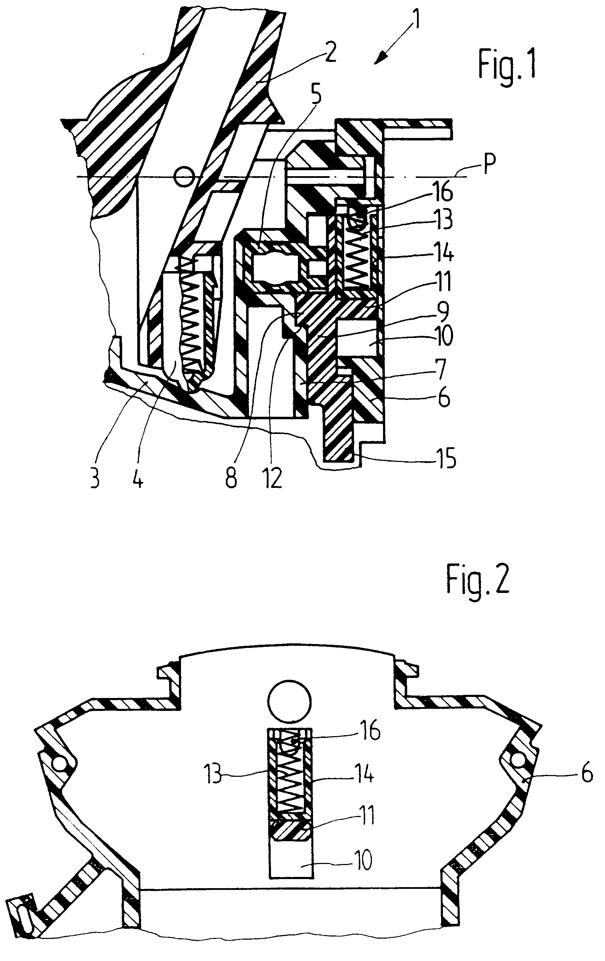

Aus Fig. 1 ist ein Teil eines Schalthebels 2 zu erkennen, welcher mit einem Schaltstück 3 fest verbunden ist. Der Schalthebel 2 ist über eine Federhülse 4 elastisch an dem Schalthebel 2 abgestützt. Bei einer Schwenkbewegung des Schalthebels 2 um die Schwenkachse P wird das Schaltstück 3 um einen entsprechenden Winkel geschwenkt.

Innerhalb des Schaltstücks 3 sind zwei querverschieblich angeordnete und durch die Kraft einer eingefügten Druckfeder sich voneinander entfernende Gleitstücke 5 angeordnet. Die Gleitstücke stützen sich an einer Rastkontur über bewegliche Rastelemente am Gehäuse 6 ab.

Das Schaltstück 3 besitzt einen dreieckigen Vorsprung 7, an dem sich ein Fortsatz 8 eines Rückstellers 9 abstützt. Der Rücksteller 9 ist in einer Längsnut 10 des Gehäuses 6 längsverschieblich und drehbar geführt, indem ein Führungsansatz 11 in die Nut eingreift.

In der in Fig. 1 dargestellten symmetrischen Lage des Rückstellers 9 ruht dieser mit seinem Fortsatz 8 auf der spitzen Kante 12 des dreieckigen Vorsprungs. Dabei übt eine Spiralfeder 13 über eine Hülse 14 mit der Bodenfläche dieser Hülse 14 eine in der Fig. 1 nach unten gerichtete Kraft auf den Führungsansatz 11 aus. Wird nun aufgrund einer Schwenkbewegung des Schalthebels 2 das vorspringende Dreieck 7 zum Betrachter hin oder von diesem weg verschwenkt, so verlagert sich die Anlagestelle 12 des Fortsatzes 8 an der seitlichen Flanke des dreieckigen Vorsprungs 7 nach unten, so daß aufgrund der Kraft der Feder 13 der Rücksteller 9 um einen von der Schwenkbewegung des Schalthebels 2 vorgegebenen Betrag nach unten wandert. Hierdurch kommt auch ein Auslösefinger 15 am unteren Ende des Rückstellers 9 in den EIngriffsbereich eines Nockens an der Lenkspindel. Dabei sind, wie in dem o.g. Stand der Technik ausführlich erläutert, zwei Abläufe denkbar. Dreht sich die Lenkspindel in einer ersten Richtung, so wird der Rücksteller 9 um den Führungsansatz 11 so weit gedreht, bis der Nocken an der Lenkspindel das untere Ende des Auslösefingers 15 passieren kann.

Dreht sich aber die Lenkspindel in der entgegengesetzten Richtung so greift der Nocken am Auslösefinger 15 an, woraufhin der Rücksteller an dem Gleitstück 5 angreift und dieses aus seiner verrasteten Betätigungslage auslöst und somit in seine Mittelstellung zurückbringt. Hierdurch wird der Blinkvorgang beendet und der Blinklichthebel in seine Mittelstellung gebracht. Für die Erfindung ist es nun wichtig, daß durch die Wirkung der Spiralfeder 13 in Verbindung mit der Hülse 14, wie aus Fig. 2 ersichtlich, nicht nur eine nach unten gerichtete Kraft ausgeübt, sondern gleichzeitig auch ein Drehmoment bewirkt wird, welches versucht, den Rücksteller 9 über den Führungsansatz 11 in seine normale Mittellage zu bringen. Wird nämlich der Auslösefinger durch den Nocken der Lenkspindel verschwenkt, so wird damit auch gleichzeitig der Führungsansatz 11 gegenüber der Bodenfläche der Hülse 14 verkantet. Damit greift die Hülse an dem Führungsansatz 11 außermittig an, was zu einem rückstellenden Drehmoment führt. Damit wird in einfacher Weise die Funktion der an sich bekannten zwei Zugfedern durch eine einzige Spiraldruckfeder ersetzt.

Um die Drehung des Führungsansatzes 11 in der Nut 10 (siehe Fig. 2) zu erleichtern, ist die Seitenfläche des Führungsansatzes 11 ballig ausgeführt und hat vorzugsweise eine kreisförmige Kontur. Doe kreisförmige Krümmung sollte so gewählt werden, daß der Krümmungsradius nur etwas kleiner ist als die halbe Nutbreite ist. Ist er größer besteht Klemmgefahr, ist er kleiner ist Spiel in ausgelenkter Stellung. Die möglichst große Auflagefläche sollte dadurch erreicht werden, daß die ebene Fläche möglichst nah an die Symmetrieebene des Absatzes gebracht wird.

Um ein seitliches Verschieben des dem Hülsenboden der Hülse 14 abgewandten Endes der Feder 13 gegenüber dem Gehäuse 6 zu verhindern, ragt vom Gehäuse 6 ein Zapfen 16 in das Federende.

## Patentansprüche

1. Rückstellvorrichtung mit Überschaltsicherung für Blinkerrückstellschalter (2,3) in Kraftfahrzeugen, wobei der Blinkerrückstellschalter (2,3) in der Nähe des Lenkrades der Lenksäule angeordnet ist und die selbsttätige Rückstellung aus einer der beiden Einschaltstellungen in die neutrale Mittelstellung durch einen am Schalter (2,3) befindlichen und in den Einschaltstellungen in die Kreisbahn eines an der Lenkspindel angeordneten Nockens hineinragenden gegen die Lenkspindel hin durch Federkraft vorgespannten Auslösefingers (15) bewirkt wird, der von einem Schaltstück (3), das um die Achse (P) parallel zur Lenkspindel schwenkbar angeordnet und mit in ein Rastprofil eingreifenden Rastelement ausgestattet ist, zusammenwirkt, dadurch **gekennzeichnet,** daß der im Gehäuse (6) des Schalters (2,3) drehbar und längsverschieblich gelagerte Auslösefinger (15) mit einem Führungsansatz (11) in eine Längsnut (10) im Gehäuse (6) ragt, daß eine sich am Gehäuse (6) abstützende Spiralfeder (13) in Längsrichtung der Nut (10) auf den Führungsansatz (11) einwirkt und somit den Auslösefinger (15) vorspannt und daß die der Spiralfeder (13) zugewandte Angriffsfläche des Führungsansatzes (11) eine senkrecht zur Längsrichtung des Auslösefingers (15) angeordnete ebene Fläche ist.

2. Rückstellvorrichtung nach Anspruch 1, dadurch **gekennzeichnet**, daß der Führungsansatz (11) im wesentlichen ein Quader ist, dessen an die seitlichen Nutwände (10) angrenzenden Seitenflächen eine bogenförmige Kontur besitzen.

3. Rückstellvorrichtung nach Anspruch 2, dadurch **gekennzeichnet**, daß der Radius der kreissektorförmig gebogenen Seitenflächen kleiner oder gleich der halben Breite der Nut (10) ist.

4. Rückstellvorrichtung nach einem der vorangegangenen Ansprüche, dadurch **gekennzeichnet**, daß das dem Führungsansatz (11) zugewandte Ende der Spiralfeder eben ausgestaltet ist und in einer senkrecht zur Längsachse der Spiralfeder sich erstreckenden Ebene liegt.

5. Rückstellvorrichtung nach einem der Ansprüche 1 bis 4, dadurch **gekennzeichnet**, daß der dem Führungsansatz zugewandte Endbereich der Spiralfeder (13) in einer in der Längsnut (10) geführten Hülse (14) gefaßt ist, die eine zum Führungsansatz hin weisende und senkrecht zur Längsachse der Feder (13) verlaufende Bodenfläche besitzt.

6. Rückstellvorrichtung nach Anspruch 5, dadurch **gekennzeichnet**, daß die Hülse (14) aus Kunststoff geformt ist und durch die Seitenwände der Längsnut drehsicher und längsverschiebbar geführt ist.

7. Rückstellvorrichtung nach einem der vorangegangenen Ansprüche, dadurch **gekennzeichnet**, daß vom Gehäuse (6) ein in Längsrichtung der Nut (10) ragender Zapfen (16) absteht, der das im Führungsansatz (11) abgewandte Ende der Spiralfeder (13) gegen eine seitliche Bewegung sichert.

## Claims

1. Reset device with switching cutout for turn signal reset switches (2, 3) in motor vehicles, wherein the turn signal reset switch (2, 3) is located near the steering wheel of the steering column and the automatic reset from one of the two switched-on settings into the neutral, middle setting takes place by means of a trigger finger (15) located on the switch (2, 3), and in the switched-on settings, said trigger finger (15) extends into the circular path of a cam located on the steering spindle and is pretensioned against the steering spindle by spring force, said trigger finger (15) cooperates with a switching element (3) which is mounted so as to pivot on the shaft (P) in parallel to the steering spindle and is equipped with a catch element engaging in a catch profile, characterized in that the trigger finger (15) is mounted so as to rotate in the housing (6) of the switch (2, 3) and can be displaced longitudinally therein, having a guide lug (11) that extends into a longitudinal groove (10) in the housing (6), that a spiral spring (13) braced against the housing (6) acts in the longitudinal direction of the groove (10) on the guide lug (11) and thus tensions the trigger finger (15) and that the contact surface of the guide lug (11) facing the spiral spring (13) is a flat surface positioned vertical to the longitudinal direction of the trigger finger (15).

2. Reset device according to Claim 1, characterized in that the guide lug (11) is essentially a square whose side surfaces adjoining the lateral groove walls (10) have an arc-shaped contour.

3. Reset device according to Claim 2, characterized in that the radius of the side surface curved like an arc sector is smaller than or equal to half the width of the groove (10).

4. Reset device according to one of the preceding Claims, characterized in that the end of the spiral spring facing the guide lug (11) is of flat design and lies in a plane extending perpendicular to the longitudinal axis of the spiral spring.

5. Reset device according to one of Claims 1 to 4, characterized in that the end region of the spiral spring (13) facing the guide lug is held in a casing (14) run in the longitudinal groove (10) which has a base surface pointing to the guide lug and running perpendicular to the longitudinal axis of the spring (13).

6. Reset device according to Claim 5, characterized in that the casing (14) is made of plastic and runs through the side walls of the longitudinal groove so that it can shift longitudinally but cannot rotate.

7. Reset device according to one of the preceding Claims, characterized in that a pin (16), which secures the end of the spiral spring (13) turned away from the guide lug (11) against a lateral movement extends from the housing (6) in the longitudinal direction of the groove (10).

## Revendications

1. Dispositif de rappel muni d'une protection contre la commutation en contre-sens, pour commutateur de rappel des clignotants (2, 3) dans des véhicules automobiles, dans lequel le commutateur de rappel des clignotants (2, 3) est agencé au voisinage du volant de direction de la colonne de direction et le mouvement de rappel automatique de l'une des deux positions de connexion dans la position centrale neutre est activé par un doigt de déclenchement (15) disposé sur le commutateur (2, 3), entrant, dans les positions de connexion, dans la voie circulaire d'une came agencée sur l'arbre de direction et pré-sollicité par une force élastique vers l'arbre de direction, ledit doigt de déclenchement coopérant avec un élément de commutation (3), qui est agencé à pivotement autour de l'axe (P) parallèlement à l'arbre de direction et est équipé d'un élément d'encliquetage s'engageant dans un profil d'encliquetage, caractérisé en ce que le doigt de déclenchement (15) monté à rotation et à translation longitudinale dans le boîtier (6) du commutateur (2, 3) fait saillie par un ergot de guidage (11) dans une rainure longitudinale (10) du boîtier (6), en ce qu'un ressort spiral (13) s'appuyant sur le boîtier (6) agit sur l'ergot de guidage (11) dans la direction longitudinale de la rainure (10) et place donc sous sollicitation préalable le doigt d'enclenchement (15), et en ce que la surface de prise de l'ergot de guidage (11) faisant face au ressort spiral (13) est une surface plane agencée perpendiculairement à la direction longitudinale du doigt de déclenchement (15).

2. Dispositif de rappel selon la revendication 1, caractérisé en ce que l'ergot de guidage (11) est essentiellement un parallélépipède rectangle dont les faces latérales limitrophes des parois latérales (10) de la rainure ont un contour en forme d'arc.

3. Dispositif de rappel selon la revendication 2, caractérisé en ce que le rayon des faces latérales courbées en secteurs de cercle est inférieur ou égal à la demi-largeur de la rainure (10).

4. Dispositif de rappel selon l'une quelconque des revendications précédentes, caractérisé en ce que l'extrémité du ressort spiral tournée vers l'ergot de guidage (11) est plate et se situe dans un plan s'étendant perpendiculairement à l'axe longitudinal du ressort spiral.

5. Dispositif de rappel selon l'une quelconque des revendications 1 à 4, caractérisé en ce que la zone d'extrémité du ressort spiral (13) faisant face à l'ergot de guidage est sertie dans une douille (14) guidée dans la rainure longitudinale (10), douille qui possède une surface de fond faisant face à l'ergot de guidage et s'étendant perpendiculairement à l'axe longitudinal du ressort (13).

6. Dispositif de rappel selon la revendication 5, caractérisé en ce que la douille (14) est formée d'une matière plastique et est guidée par les parois latérales de la rainure longitudinale dans un mouvement de translation longitudinale sans pouvoir tourner.

7. Dispositif de rappel selon l'une quelconque des revendications précédentes, caractérisé en ce qu'une broche (16), faisant saillie dans la direction longitudinale de la rainure (10) se dresse sur le boîtier (6), ladite broche protégeant l'extrémité du ressort spiral (13) opposée à l'ergot de guidage (11) contre un déplacement latéral.
